Europäisches Patentamt

European Patent Office

Office européen des brevets

(11) Veröffentlichungsnummer: **0 266 638 B1**

(19)

(12) **EUROPÄISCHE PATENTSCHRIFT**

(45) Veröffentlichungstag der Patentschrift: **30.12.92**

(51) Int. Cl.5: **B26D 7/00**, B26F 3/00

(21) Anmeldenummer: **87115489.4**

(22) Anmeldetag: **22.10.87**

(54) **Schneidportal einer Höchstdruck-Fluidstrahlschneidanlage.**

(30) Priorität: **05.11.86 DE 3637617**

(43) Veröffentlichungstag der Anmeldung:
**11.05.88 Patentblatt 88/19**

(45) Bekanntmachung des Hinweises auf die
Patenterteilung:
**30.12.92 Patentblatt 92/53**

(84) Benannte Vertragsstaaten:
**AT BE CH ES FR GB IT LI NL SE**

(56) Entgegenhaltungen:
**DE-B- 1 683 465**
**DE-C- 602 891**
**GB-A- 2 017 857**
**GB-A- 2 034 228**
**US-A- 2 789 480**

(73) Patentinhaber: **Dürkopp Systemtechnik GmbH**
**August-Bebel-Str. 133 - 135**
**W-4800 Bielefeld 1(DE)**

(72) Erfinder: **Zabinski, Siegfried**
**Berliner Strasse 9**
**W-4800 Bielefeld 14(DE)**
Erfinder: **Biervert, Klaus**
**Odenwälder Strasse 9**
**W-4905 Spenge(DE)**
Erfinder: **Küpper, Gerd**
**Schuckenbäumerstrasse 16**
**W-4902 Bad Sulzuflen(DE)**

(74) Vertreter: **Rehmann, Klaus-Thorsten, Dipl.-Ing.**
**et al**
**c/o Dürkopp Adler AG, Postfach 6**
**W-4800 Bielefeld 1(DE)**

## Beschreibung

Die Erfindung betrifft das Schneidportal einer Höchstdruck-Fluidstrahlschneidanlage. Um einen Materialzuschnitt vornehmen zu können, muß der Schneidstrahl einer Fluidstrahlschneidanlage in einer parallel zum Schneidtisch verlaufenden Ebene in alle Richtungen frei bewegbar sein.

Diese zwei Freiheitsgrade sind entkoppelt und dem Schneidportal bzw. dem Schneidkopfträger zugeordnet.

Die GB-A-2 034 228 offenbart eine Höchstdruck-Fluidstrahlschneidanlage, bei der das Schneidportal in Längsrichtung verschiebbar auf dem Zuschneidtisch gelagert ist und einen Schneidkopfträger aufweist, der in Querrichtung an einer am Schneidportal befestigten Führungsschiene verschiebbar gelagert ist.

Das Gesamtgewicht des Schneidportals ist ein wichtiger Parameter im Hinblick auf die durchschnittliche Schneidgeschwindigkeit der Anlage, die umso höher liegt, je kleiner die zu beschleunigenden Massen sind.

Der Erfindung liegt die Aufgabe zugrunde, ein Schneidportal für eine Höchstdruck-Fluidstrahlschneidanlage zu schaffen, das bei hoher Stabilität ein geringes Eigengewicht aufweist und dessen zur Querverschiebung des auf diesem angeordneten Schneidkopfes benötigten Lagerstellen integrale Bestandteile sind.

Die Lösung dieser Aufgabe ist den Merkmalen des kennzeichnenden Teils des Anspruchs 1 entnehmbar. Anspruch 2 gibt eine Ausgestaltungsform an.

An Hand einer Zeichnung soll die Erfindung näher erläutert werden.

Es zeigt:

Figur 1     die komplette Höchstdruck-Fluidstrahlschneidanlage in perspektivischer Ansicht

Figur 2     einen Schnitt des Schneidportals entlang der Linie A-A

Figur 3     einen Teilschnitt des Schneidportals entlang der Linie B-B

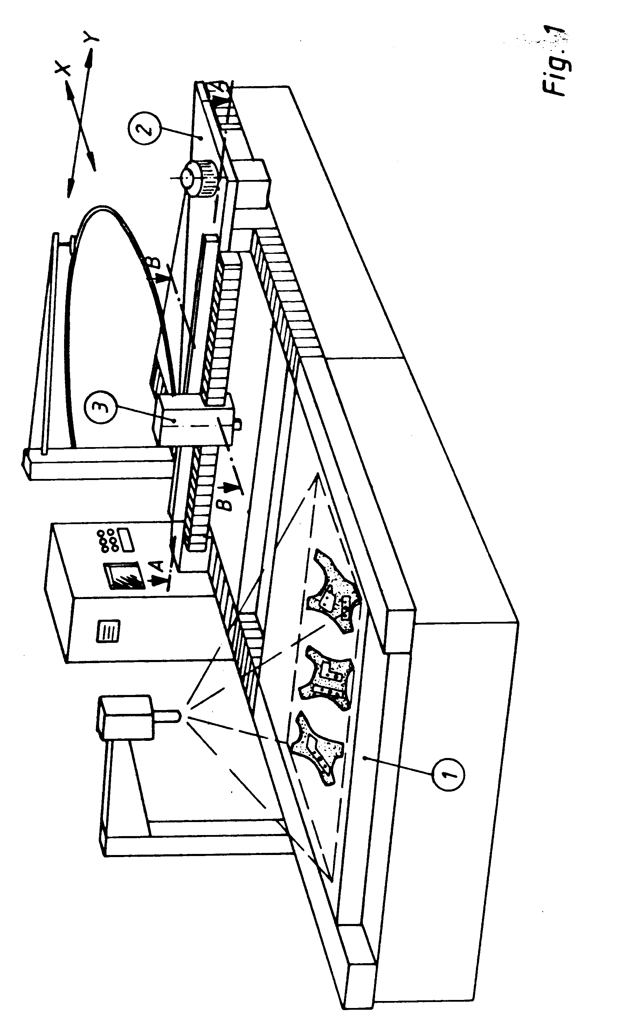

Figur 1 ist der Aufbau einer Höchstdruck-Fluidstrahlschneidanlage entnehmbar. Auf dem Schneidtisch 1 ist das Schneidportal 2 auf zwei nicht gezeigten Zahnstangen so gelagert, daß es in Längsrichtung verschoben werden kann.

Das Schneidportal 2 trägt den auf diesem quer verschieblich angeordneten Schneidkopfträger 3.

Die Antriebe in Längs- und Querrichtung erfolgen über spielarme Getriebe durch Scheibenläufermotoren.

Während eines Zuschnitts werden teilweise recht komplizierte Muster mit zahlreichen Krümmungen abgefahren, so daß, um eine möglichst hohe durchschnittliche Schneidgeschwindigkeit der Anlage zu realisieren, die zu beschleunigenden Massen gering sein müssen. Aus diesem Grund besteht das Schneidportal 2 aus zwei dünne Platten 4, 5 die mit Abstand zueinander angeordnet sind und der durch sie gebildete Zwischenraum mit einem wabenförmigen Material 6 ausgefüllt ist. Ein solcher Verbundwerkstoff ist unter der Bezeichnung honeycomb beispielsweise aus der Luft- und Raumfahrt bekannt. Zur Erhöhung der Stabilität ist in vorteilhafter Weise das Schneidportal 2 so ausgebildet, daß es in der Draufsicht eine trapezförmige Gestalt aufweist. ferner ist entlang der y-Achse eine Verstärkung in Form einer ebenfalls aus Verbundwerkstoff bestehenden Leiste 21 aufgebracht.

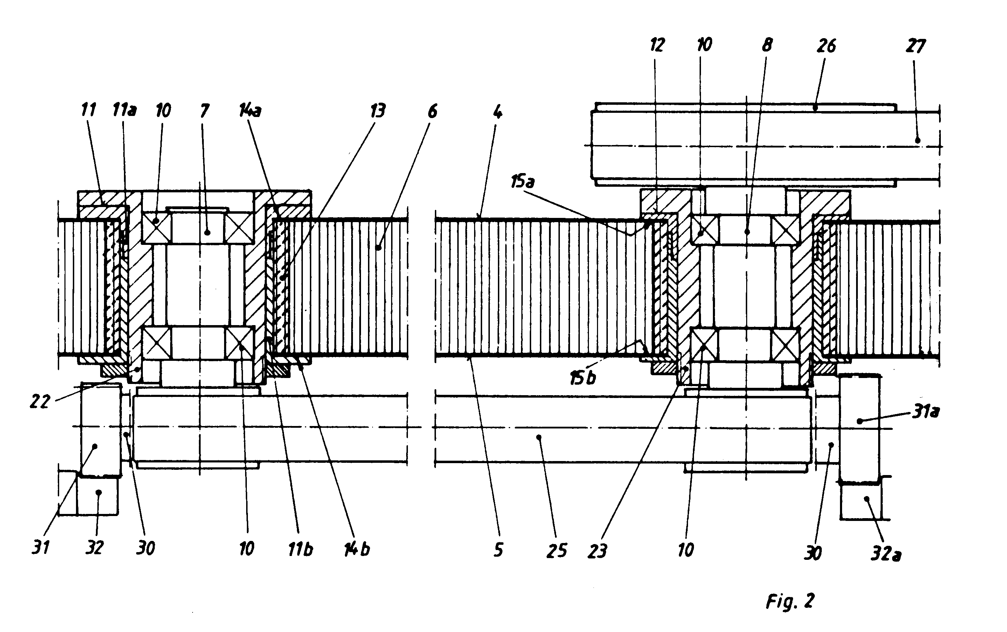

Figur 2 zeigt den Schnitt entlang der Linie A-A nach Figur 1. Es ist ersichtlich, daß die zur Querverschiebung des Schneidkopfträgers 3 notwendigen Wellen 7, 8 in Lagergehäusen 22, 23 indirekt in der Wabenstruktur 6 des Schneidportals 2 befestigt sind. die Lagergehäuse 22, 23 sind in Lagerschalen 11, 12 eingepreßt, die aus zweiteiligen Hülsen 11a, 11b bzw. 12a, 12b zusammensetzbar sind und durch einen Kunststoffkitt 13 mit der Wabenstruktur 6 eine feste Verbindung eingehen. Die Hülsenteile 11a, 11b bzw. 12a, 12b weisen an ihren äußeren Enden radiale Kragen 14a, 14b bzw. 15a, 15b auf, die auf der Platte 4 bzw. 5 aufliegen.

Die Lagerschalen 11, 12 sind senkrecht zu den Platten 4, 5 und somit parallel zur Wabenstruktur 6 eingesetzt. In vorteilhafter Weise werden die zweiteiligen Hülsen 11a, 11b bzw. 12a, 12b in dafür vorbereitete Bohrungen beidseitig eingesetzt und ineinander gefügt. Daran anschließend werden die Lagerschalen 11, 12 mit einem Epoxidharz umspritzt, nach dessen Aushärtung eine feste Verbindung zwischen den Lagerschalen 11, 12 und der Wabenstruktur 6 hergestellt ist.

Der Innendurchmesser d, der Lagerschalen 11, 12 muß so bemessen sein, daß vom Antrieb resultierende Biegekräfte nicht zu einer Deformation der Platten 4, 5 führen. Die mitlaufende Welle 7 ist mit der Antriebswelle 8 über einen Zahnriemen 25, an dem der hier nicht gezeigte Schneidkopfträger 3 besfestigt ist, verbunden. Je nach Drehrichtung des Zahnriemens 25 wird also der Schneidkopfträger 3 nach links oder rechts bewegt. Die Welle 7 ist exzentrisch im Lagergehäuse 22 angeordnet, so daß damit die Spannung des Zahriemens 25 eingestellt werden kann.

Das Lagergehäuse 22 kann mehrere nicht näher dargestellte Durchgangsbohrungen aufweisen, die, ohne die Festigkeit zu beeinflussen, der Forderung nach konsequentem Leichtbau entgegenkommen.

Auf der Antriebswelle 8 ist ein Zahnrad 26 befestigt, das über den Zahnriemen 27 mit dem nicht gezeigten Scheibenläufermotor in Wirkverbindung steht.

In vorteilhafter Weise sind beide Wellen 7, 8 mit den sie umgebenden Bauteilen (Wellenlager 10, Lagergehäuse 22, 23) so in den Lagerschalen 11, 12 angeordnet, daß im Bedarfsfall die komplette Einheit ohne Demontage des Schneidportals 2 ausgetauscht werden kann.

Die Querverschiebung des Schneidkopfträgers 3 erfolgt entlang einer Führungsschiene 16, die seitlich am Schneidportal 2 befestigt ist.

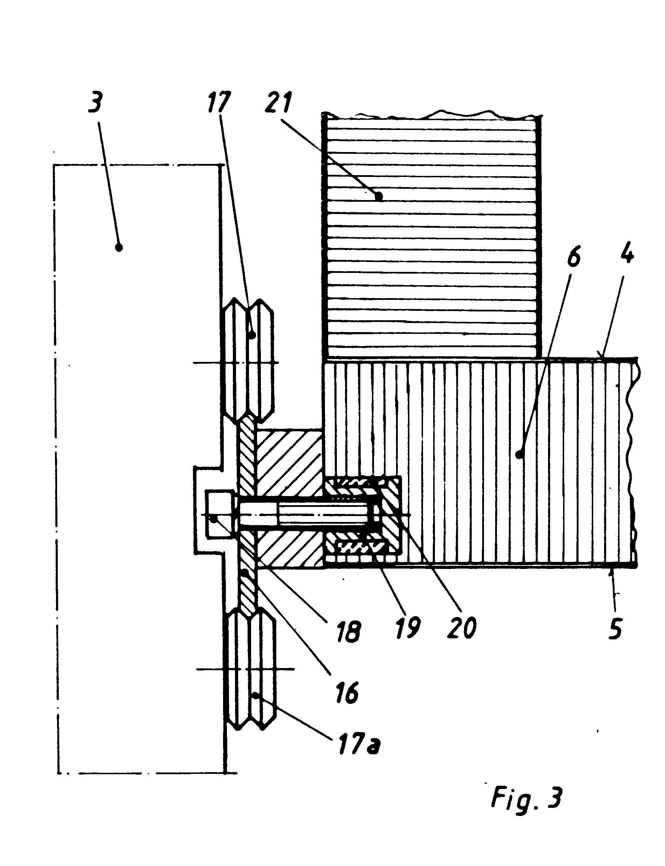

Figur 3 zeigt einen Teilschnitt entlang der Linie B-B. Der Schneidkopfträger 3 läuft über an diesem befestigten Rollen 17, 17a auf der Führungsschiene 16, die mittels mehrerer Schrauben 18 direkt in der Wabenstruktur 6 des Verbundwerkstoffes, senkrecht zum Verlauf der Waben, befestigt ist.

Die Schrauben 18 greifen in Gewindestücke 19 ein, die parallel zu den Platten 4, 5 in die Wabenstruktur 6 eingesetzt und mittels eines Epoxidharz 20 mit dieser verklebt sind.

Um eine sichere Befestigung zu gewährleisten ist es wichtig, in die an und für sich nicht belastbare Seite des Schneidportals 2 mehrere Bohrungen mit größerem Durchmesser als dem Außendurchmesser des Gewindestücks 19 einzubringen und diese Bohrungen mit Epoxidharz aufzufüllen. Daran anschließend wird in jede der Bohrungen ein Gewindestück 19 eingeführt und bis zum Aushärten des Epoxidharzes fixiert. Es ist ebenso denkbar, eine sichere Befestigung dadurch zu erzielen, daß die Bohrungen mit Kunststoffkitt aufgefüllt werden und nach dessen Aushärtung koaxial zu den ursprünglichen Bohrungen Gewinde eingeschnitten werden, in die nicht näher dargestellte Gewindeeinsätze einschraubbar sind.

Um sicherzustellen, daß beide Seiten des Schneidportals 2 in Längsrichtung exakt parallel verschoben werden, ist am Schneidportal 2 eine als Torsionswelle ausgebildete Ausgleichswelle 30 angebracht, deren Enden mit Ritzeln 31, 31a versehen sind, die in die auf dem Schneidtisch angeordneten Zahnstangen 32, 32a eingreifen, wie eine Teilansicht in Figur 2 zeigt.

Im Vergleich zu den bisherigen Schneidportalen aus Werkstoff Stahl ist das Vorgestellte aus Verbundwerkstoff um mehr als eine Zehnerpotenz leichter, woraus bei gleichwertiger Steifheit eine wesentlich höhere Beschleunigungfähigkeit resultiert, was eine bedeutende Schneidzeitverkürzung eines Materialzuschnitts nach sich zieht.

## Patentansprüche

1. Schneidportal (2) einer Höchstdruck-Fluidstrahlschneidanlage, das auf einem Schneidtisch (1) verschiebbar gelagert ist und einen Schneidkopfträger (3) aufweist, der quer hierzu an einer am Schneidportal (2) befestigten Führungsschiene (16) verlagerbar ist, dadurch gekennzeichnet, daß

- das Schneidportal (2) gebildet wird aus zwei parallel zueinander liegenden dünnen Platten (4, 5), deren Zwischenraum ausgefüllt ist mit einem wabenförmig ausgebildeten Material (6),
- die die Lagerung der zum Antrieb des Schneidkopfträgers (3) dienenden Wellen (7, 8) aufnehmenden Lagerschalen (11, 12) durch zweiteilige Hülsen (11a, 11b, bzw. 12a, 12b) ausgebildet sind, die in ihrer Längsachse senkrecht zur Oberfläche der dünnen Platten (4, 5) in das wabenförmige Material (6) eingebracht und mit diesem verbunden sind,
- die Führungsschiene (16) des Schneidkopfträgers (3) in Gewindestücke (19) festgeschraubt ist, die in ihrer Längsachse parallel zur Oberfläche der dünnen Platten (4, 5) in das wabenförmige Material (6) eingebracht und mit diesem verbunden sind.

2. Schneidportal nach Anspruch 1, dadurch gekennzeichnet, daß die Trennfuge der zweiteiligen Hülsen (11a, 11b, 12a, 12b) deren Gesamtlänge im Verhältnis von 1/3 zu 2/3 teilt.

## Claims

1. Cutting portal (2) of an ultra-high-pressure fluid jet cutting system that is borne on a cutting table (1) such that it can be moved, featuring a cutting-head support (3), which is arranged such that it can be moved transversely to said table on a guide rail (16) attached to the cutting portal (2) characterized in that

- the cutting portal (2) comprises two thin plates which are parallel to each other (4, 5), the space between them being filled with a honeycomb-like material (6),
- the bearing shells (11, 12) that house the bearings of the shafts (7, 8) for driving the cutting head support (3), are formed from twopiece sleeves (11a, 11b, or 12a, 12b), which are introduced into the honeycomb-like material (6) and connected to said material with their longitudinal axis perpendicular to the surface of the thin plates (4, 5),
- the guide rail (16) of the cutting-head support (3) is screwed into the threaded coupling (19), which is introduced into the honeycomblike material (6) and connected to said material with its longitudinal axis parallel to the surface of the thin plates (4, 5).

**2.** Cutting portal according to claim 1, characterized in
that the space between the two-piece sleeves (11a, 11b, 12a, 12b) divides their total length with a ratio of 1/3 to 2/3.

**Revendications**

**1.** Pont de découpe (2) d'une unité de découpe à rayon fluide de très haute pression étant logé d'une manière mobile sur une table de découpe (1) et présentant un support tête de découpe (3), déplaçable dans le sens transversal à ladite table sur un rail de guidage (16) fixé sur le pont de découpe (2),
caractérisé par le fait que

- le pont de découpe (2) se compose de deux plaques fines parallèles (4, 5), l'espace entre elles étant remplie d'une matière en forme de gaufre (6),
- les coquilles de coussinet (11, 12) logeant les paliers des arbres (7, 8) pour l'actionnement du support tête de découpe (3) sont réalisées sous forme de douilles deux-pièces (11a, 11b, ou 12a, 12b) qui sont introduites dans la matière en forme de gaufre (6) et sont connectées à ladite matière de sorte que leur axe longitudinal est perpendiculaire à la surface des plaques fines (4, 5),
- le rail de guidage (16) du support tête de découpe (3) est vissé dans la douille filetée (19), qui est introduite dans la matière en forme de gaufre (6) et est connectée à ladite matière de sorte que son axe longitudinal est parallèle à la surface des plaques fines (4, 5).

**2.** Pont de découpe selon la revendication 1, caractérisé par le fait que
la fente de séparation des douilles deux-pièces (11a, 11b, 12a, 12b) divise leur longueur totale dans une proportion 1/3 à 2/3.

Fig. 1

Fig. 2

EP 0 266 638 B1

Fig. 3